(19) Europäisches Patentamt
European Patent Office
Office européen des brevets

(11) **EP 3 844 479 B1**

(12) **FASCICULE DE BREVET EUROPEEN**

(45) Date de publication et mention
de la délivrance du brevet:
**04.10.2023 Bulletin 2023/40**

(21) Numéro de dépôt: **19774161.4**

(22) Date de dépôt: **30.08.2019**

(51) Classification Internationale des Brevets (IPC):
**G01N 5/00** *(2006.01)* **G01N 1/22** *(2006.01)*
**G01N 15/02** *(2006.01)* **G01G 3/12** *(2006.01)*
**G01G 3/16** *(2006.01)*

(52) Classification Coopérative des Brevets (CPC):
**G01N 5/00;** G01G 3/16; G01N 1/2208;
G01N 2015/0261

(86) Numéro de dépôt international:
**PCT/FR2019/052011**

(87) Numéro de publication internationale:
**WO 2020/044000 (05.03.2020 Gazette 2020/10)**

(54) **CAPTEUR DE PARTICULES FINES AVEC MICROBALANCES EN CASCADE**

FEINPARTIKELSENSOR MIT KASKADIERTEN MIKROWAAGEN

FINE PARTICLE SENSOR WITH CASCADED MICROSCALES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.08.2018 FR 1857827**

(43) Date de publication de la demande:
**07.07.2021 Bulletin 2021/27**

(73) Titulaires:
• **Centre Scientifique et Technique du Bâtiment
77420 Champs-sur-Marne (FR)**
• **Université Gustave Eiffel
77420 Champs-Sur-Marne (FR)**
• **Université Paris Est Créteil Val de Marne
94000 Créteil (FR)**

(72) Inventeurs:
• **ALGRE, Emmanuelle
94420 Le Plessis Trevise (FR)**
• **SOYSAL, Ugur
77186 Noisiel (FR)**
• **MARTY, Frédéric
77700 Magny le Hongre (FR)**
• **MOTZKUS, Charles
94490 Ormesson sur Marne (FR)**
• **ROBINE, Enric
77600 Conches-sur-Gondoire (FR)**
• **BERTHELOT, Brice
77420 Champs-sur-Marne (FR)**
• **GEHIN, Evelyne
94240 l'Hay les Roses (FR)**

(74) Mandataire: **A.P.I. Conseil
Immeuble Newton
4, rue Jules Ferry
64000 Pau (FR)**

(56) Documents cités:
**EP-A1- 2 204 641 US-A- 5 369 033**

• **MALDONADO-GARCIA MARIBEL ET AL:
"Chip-Scale Implementation and Cascade
Assembly of Particulate Matter Collectors With
Embedded Resonant Mass Balances", IEEE
SENSORS JOURNAL, IEEE SERVICE CENTER,
NEW YORK, NY, US, vol. 17, no. 6, 15 mars 2017
(2017-03-15), pages 1617-1625, XP011641611,
ISSN: 1530-437X, DOI:
10.1109/JSEN.2016.2638964 [extrait le
2017-02-17]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 844 479 B1

**Description**

**DOMAINE DE L'INVENTION**

La présente invention concerne un capteur de mesure de la concentration massique de particules fines pour la pollution atmosphérique, potentiellement de l'air intérieur et des contaminations d'origine biologique.

**ETAT DE LA TECHNIQUE**

La pollution particulaire est mise en cause dans la survenue de diverses pathologies cardiovasculaires, cérébrovasculaires et respiratoires au travers de mécanismes de toxicité décrits par le Haut Conseil de la Santé Publique (HCSP) (« Pollution par les particules 2 dans l'air ambiant - Recommandations pour protéger la santé », 2012). La pollution atmosphérique et les particules présentes dans l'air ont été classées "cancérogènes certains pour l'homme" en 2013 par le Centre international de Recherche sur le cancer (IARC, en anglais « monographs on the évaluation of carcinogenic risks to humans » ; volume 109). Cette pollution a également été identifiée comme responsable de décès prématurés, de l'ordre de 42 000 par an en France, que le respect des seuils préconisés par l'OMS (10 et 25 $\mu$g/m3 respectivement moyenne annuelle et moyenne sur 24h pour les PM2.5 et 20 et 50 $\mu$g/m3 respectivement moyenne annuelle et moyenne sur 24h pour les PM10) permettrait de réduire sensiblement comme le souligne le rapport Aphekom (InVS et autres partenaires européens, 2011).

Actuellement, la méthode de référence pour la mesure des concentrations massiques en PM10 et PM2,5 est la méthode gravimétrique décrite dans la norme Européenne "EN 12341 :2014 2016". Cette méthode de prélèvement sur filtre suivie d'une pesée dans des conditions normalisées est très lourde à mettre en oeuvre et identifiée comme "difficilement applicable dans le cadre de la production de données en routine des réseaux de mesure" par AIRPARIF dans un rapport de synthèse datant de 2008 (AIRPARIF, 2008). La norme Européenne permet d'utiliser d'autres méthodes que la méthode gravimétrique sous réserve de prouver que la mesure présente un rapport constant avec les mesures de références. On parle généralement d'homologation via une « démonstration d'équivalence à la méthode de référence ».

Il existe actuellement trois méthodes de mesures en continu des PM10 et PM2,5 utilisées par les réseaux de surveillances en Europe : la jauge Béta, le TEOM (en anglais « Tapered Element Oscillating Microbalance », soit en français « Microbalance oscillante à élément conique ») et le TEOM-FDMS (en anglais « Filter Dynamics Measurement System », soit en français « Système de mesures avec filtres dynamiques »).

On peut noter également qu'il existe des méthodes optiques de mesure de concentration massique (néphélométrie) qui consistent à mesurer l'intensité de lumière diffusée par les particules passant dans une cellule de mesure éclairée par une source lumineuse. Un étalonnage permet de déterminer la concentration massique. Cette méthode qui présente l'avantage d'être miniaturisable et peu coûteuse ne permet pas de définir un facteur de correction stable avec les mesures de référence ce qui la rend inappropriée selon les standards définis par la norme Européenne.

On retrouve dans la littérature d'autres systèmes permettant de réaliser une mesure directe en temps réel de la masse collectée sur les différents étages d'un impacteur en cascade. Ces systèmes appelés QCM (en anglais « Quartz Crystal Microbalance » soit en français « Microbalance à quartz ») permettent d'obtenir la concentration massique en particule par classe de taille correspondant à chaque étage de l'impacteur. Ces systèmes ne permettent en général pas d'obtenir la concentration massique totale mais peuvent cependant mesurer les fractions de concentration massiques telles que les PM10-2,5, PM2,5-1 ou PM1-0,05 ce qui peut être intéressant d'un point de vue épidémiologique. Il faut cependant noter que ces dispositifs sont actuellement très peu utilisés car présentant de nombreuses limites métrologiques (Berthelot, 2015).

D'après les éléments précédents il apparait très clairement qu'il n'existe pas actuellement de dispositifs de mesures en temps réel ou à faible pas de temps, des concentrations massiques particulaires répondant aux exigences Européennes et de dimensions et fonctionnement adaptés à un déploiement multiple dans des environnements intérieurs ou extérieurs.

Dans ce cadre, l'invention concerne le développement d'un système miniature de surveillance en continu de la concentration massique particulaire pour différentes fractions granulométriques (PM10-2,5, PM2,5-1 ou PM1) de l'air intérieur ou de l'air

MALDONADO-GARCIA MARIBEL ET AL ("Chip-Scale Implementation and Cascade Assembly of Particulate Matter Collectors With Embedded Resonant Mass Balances", IEEE SENSORS JOURNAL, IEEE SERVICE CENTER, NEW YORK, NY, US, vol. 17, no. 6, 15 mars 2017 (2017-03-15), pages 1617-1625, XP011641611, ISSN: 1530-437X, DOI: 10.1109/JSEN.2016.2638964) divulgue une microbalance avec un assemblage en cascade.

US 5 369 033 montre un système de nettoyage à microbalance avec des caractéristiques de lavage, ne présentant pas la même configuration.

EP 2 204 641 montre le chauffage d'une microbalance à des fins de nettoyage.

**EXPOSE DE L'INVENTION**

L'invention concerne un système miniature d'analyse granulométrique des particules, de préférence polluantes, en suspension dans l'air. Celui-ci comprend un dispositif de sélection miniature utilisant les propriétés aérodynamiques des particules ainsi que des microbalances MEMS pour la mesure de masse.

La présente invention est telle que définie dans la revendication 1.

L'invention permet de développer des capteurs performants pour l'analyse de la qualité de l'air due à la pollution particulaire pour proposer « des alternatives » aux systèmes gravimétriques actuels dont la sensibilité et la portabilité sont limitées.

En effet, les capteurs gravimétriques usuels utilisent la mesure de la fréquence de résonance d'un oscillateur mécanique. La fréquence de résonance est re-

$$f_r = \frac{1}{2\pi}\sqrt{\frac{k}{m}}$$

liée à sa masse par                où $f_r$ est la fréquence de résonance, k la constante de raideur et m la masse de l'oscillateur. Un ajout de masse sur l'oscillateur va donc provoquer une variation de sa fréquence de résonance.

La masse minimum détectable par un résona-

$$\Delta m_{min} = \frac{m}{Q}$$

teur est donnée par :                , où Q est le facteur de qualité. Donc un élément résonant de masse faible et avec un fort facteur de qualité aura une sensibilité de détection plus importante. En utilisant des micro ou nano-systèmes en silicium, la masse du résonateur pourra être considérablement réduite. L'invention permet de développer des dispositifs MEMS pour mesurer des masses « intermédiaires » de particules, c'est-à-dire entre l'attogramme et le nanogramme. En particulier la microbalance est destinée à la mesure d'un décalage de fréquence d'oscillation.

La taille et le coût réduits du dispositif permettent son déploiement à grande échelle et son adaptation à la surveillance d'environnements spécifiques et/ou aux besoins du public. De par ces caractéristiques, le dispositif peut également constituer un équipement individuel et/ou nomade. Ce système peut également être utilisé pour évaluer les nouvelles pratiques et offres qui accompagneront les politiques d'amélioration des performances énergétiques et environnementales des bâtiments qui se mettent en place.

Le dispositif peut être intégré à un réseau/objet connecté/instrument et /ou à un dispositif de gestion de la qualité de l'air d'un bâtiment tel qu'un dispositif de contrôle du système d'aération.

**Selon d'autres caractéristiques optionnelles du capteur :**

- la surface de la membrane est conformée pour permettre de contrôler l'adhésion et/ou de la séparation des particules, par :

  - micro/nano structuration

  - fonctionnalisation physico-chimique ;

  contrôlant l'adhésion des particules sélectivement selon leurs propriétés de surface ou le mouillage du fluide de nettoyage.

- la membrane est suspendue à plusieurs ancrages auxquels elle est fixée tendue, et disposée entre plusieurs électrodes aptes à l'actionnement électrostatique ou à la mesure. De préférence, la membrane oscillante est apte à se déformer dans son plan en mode de Lamé ou extensionnel. De façon plus préférée, la membrane oscillante est apte à se déformer seulement dans son plan en mode de Lamé ou extensionnel. Cela est possible notamment grâce à la disposition de la membrane décrite dans la présente invention.

- les moyens d'entrainement du flux d'aérosol, sont configurés pour permettre un débit d'un à plusieurs L/min, et dans lequel les buses axiales à chaque étage présentent une ouverture d'une à plusieurs centaines de micromètres.

- la membrane oscillante en silicium est à actionnement électrostatique, et dans lequel une tension alternative combinée à une tension continue est amenée sur une ou plusieurs électrodes d'actionnement alors que la membrane suspendue est maintenue à un potentiel électrostatique nul de façon à déformer la membrane, la membrane étant chargée électrostatiquement, le mouvement de celle-ci induisant un mouvement de charge et donc un courant mesuré via des contacts liés aux ancrages de la membrane oscillante ou liés à une électrode ne servant pas à l'actionnement.

- au moins une couche de matériau est située sur la surface de la membrane de la microbalance MEMS, de façon à permettre une adhérence préférentielle de particules cibles. En particulier, la surface de la membrane oscillante est micro/nano structurée ou fonctionnalisée physico-chimiquement, par exemple par du silicium noir.

- la membrane oscillante présente une surface d'un à plusieurs mm$^2$.

- la surface de la membrane est du silicium noir. Avantageusement, le silicium noir comporte des nano-piliers, de préférence aiguisés, qui permettent de réduire l'effet de rebond des particules, fournissant ainsi un modèle de dépôt confiné.

- la surface de la membrane est recouverte d'une fine couche de polymère.

- chaque étage présente : au moins un évidement axial situé sous chaque membrane afin de la suspendre, des ouvertures latérales à l'évidement axial et destinées à l'écoulement du flux d'aérosol et situées de part et d'autre de l'évidement axial, et à chaque entrée d'étage, une buse axiale destinée à l'écoulement du flux d'aérosol.

- le corps d'impacteur présente un empilement de tranches de silicium ou d'autres matériaux micro/nano structurés, en appui et fixées entre elles.

- chaque étage présente quatre tranches: une première tranche avec une buse axiale ; une deuxième tranche avec un évidement axial et des ouvertures latérales d'écoulement ; deux tranches dites « intercalaires» se disposant entre la première tranche et la deuxième tranche.

- le système de nettoyage des microbalances MEMS est réalisé par des canaux d'entrée et des canaux latéraux de sortie situés entre une tranche de silicium dite « intercalaire » et la première tranche de silicium.

- la membrane de la microbalance MEMS est conformée pour présenter :

  - un facteur de qualité Q, supérieur à 15000,
  - une masse m comprise entre 5 et 100 $\mu$g
  - la masse minimum détectable par le capteur étant donnée par $m_{min} = \frac{m}{Q}$

- le diamètre et le nombre des ouvertures latérales et de chaque buse axiale sont choisis pour permettre le contrôle du débit du flux d'aérosol et le tri des particules PM10 selon leur inertie à chaque étage afin de mesurer notamment une fraction thoracique en particules. Les particules PM10 sont de préférence d'un diamètre moyen de 300 nm à 10 $\mu$m.

- les fréquences d'oscillation de la membrane sont comprises entre 1 et 20 MHz. En particulier, la membrane est agencée de façon à permettre des fréquences d'oscillation de la membrane sont comprises entre 1 et 20 MHz.

- le système de nettoyage des microbalances MEMS comporte un élément chauffant situé dans la membrane et/ou le corps d'impacteur. De préférence, le système de nettoyage des microbalances MEMS comporte un élément chauffant situé sous la au moins une membrane et/ou dans le corps d'impacteur, et cela de préférence à chaque étage.

- le système de nettoyage des microbalances MEMS comporte la membrane oscillante destinée à osciller à une fréquence donnée permettant la séparation des particules de la membrane.

- le corps d'impacteur présente des moyens d'ouverture/fermeture : des ouvertures axiales; et/ou des buses axiales; pour contrôler le débit du flux d'aérosol s'écoulant dans le corps d'impacteur.

- les buses axiales et les évidements axiaux sont de taille décroissante suivant l'axe de l'écoulement de l'aérosol de manière à impacter des particules de taille décroissante à chaque étage.

- le diamètre et le nombre d'ouvertures latérales permettant l'écoulement est déterminé pour impacter : les particules entre 10 micromètres et 2,5 micromètres ou plus, à un premier étage ; et les particules entre 2,5 micromètres et un micromètre à un second étage ; et les particules entre un micromètre et 0,3 micromètres à un troisième étage, suivant le sens de l'écoulement du flux d'aérosol.

- la conduite en silicium est recouverte d'un métal conducteur.

- les dimensions de la membrane oscillante sont comprises en largeur entre plusieurs centaines de microns et plusieurs millimètres. En particulier, les dimensions de la membrane oscillante sont comprises en largeur entre microns et plusieurs millimètres.

- pour chaque microbalance MEMS, la distance entre la membrane oscillante et des actionneurs électrostatiques est inférieure ou égale à 1 micromètre.

- la membrane oscillante est une membrane rectangulaire. De préférence une membrane rectangulaire ou carrée.

- la microbalance MEMS est configurée pour permettre la mesure de masse des particules entre l'attogramme et le nanogramme.

Une des originalités de ce dispositif réside dans la co-intégration du système de tri, des microbalances fabriquées à l'aide des technologies de microfabrication du silicium et de fonctions de nettoyage, de référence ou de calibration automatisés. La fonctionnalisation de la surface des microbalances par traitement ou microstructuration adéquate permet une adhésion préférentielle permettant de mesurer les concentrations massiques de contaminants à surveiller. Ce dispositif est intégré sur carte électronique afin de rendre compact le traitement et le contrôle des signaux de mesure. L'intégration de ces fonctions permet l'utilisation de l'instrument pour une surveillance continue et temps réel de la qualité de l'air.

## DESCRIPTION DES FIGURES

D'autres objectifs, caractéristiques et avantages sortiront de la description détaillée qui suit en référence aux dessins donnés à titre illustratif et non limitatif parmi lesquels :

- la figure 1 représente une vue en coupe verticale selon l'axe 1 représenté sur la figure 3, du dispositif selon l'invention ;
- la figure 2 représente une vue verticale selon l'axe 2 perpendiculaire à l'axe 1, du dispositif selon l'invention;
- la figure 3 représente une vue de dessus du dispositif selon l'invention, avec les axes 1 et 2 ;
- la figure 4 représente une image MEB d'une microbalance MEMS formée d'un résonateur en silicium à actionnement électrostatique et principe de mesure avec une récupération du signal de sortie via un ancrage en coupe;
- la figure 5 représente la courbe de résonance d'une microbalance avant (courbe AV) avec comme fréquence moyenne 4100297.7 Hz, et après (courbe AP) impaction d'aérosols avec comme fréquence moyenne 4100222.5 Hz ;
- la figure 6 représente une image MEB d'une microbalance MEMS après dépôt d'aérosols;
- la figure 7 représente les fonctions principales du dispositif selon l'invention ;
- la figure 8 représente le procédé de fabrication d'une membrane utilisée dans le dispositif ;

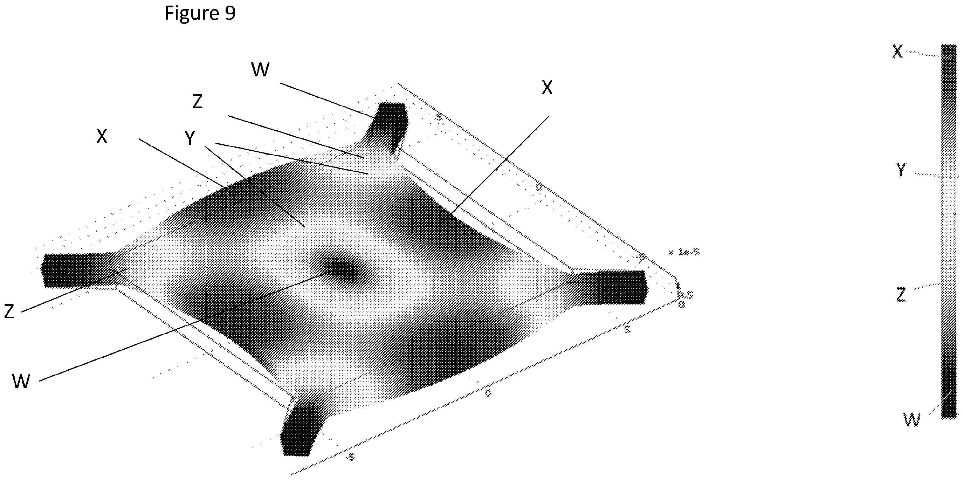

- la figure 9 représente un résultat de simulation mécanique par éléments finis avec le logiciel COMSOL @, montrant la déformation maximale d'une membrane carrée et de ses 4 ancrages de suspension pour une fréquence d'oscillation correspondant à la fréquence de résonance de Lamé. Les déformations élastiques indiquées sur la figure varient de 0 (pour le repère W) à quelques nanomètres (pour le repère X) ;
- les figures 10a et 10b représentent des images par microscopie électronique à balayage d'une membrane carrée sur laquelle a été réalisée une zone en silicium noir au centre.

## DESCRIPTION DETAILLEE DE L'INVENTION

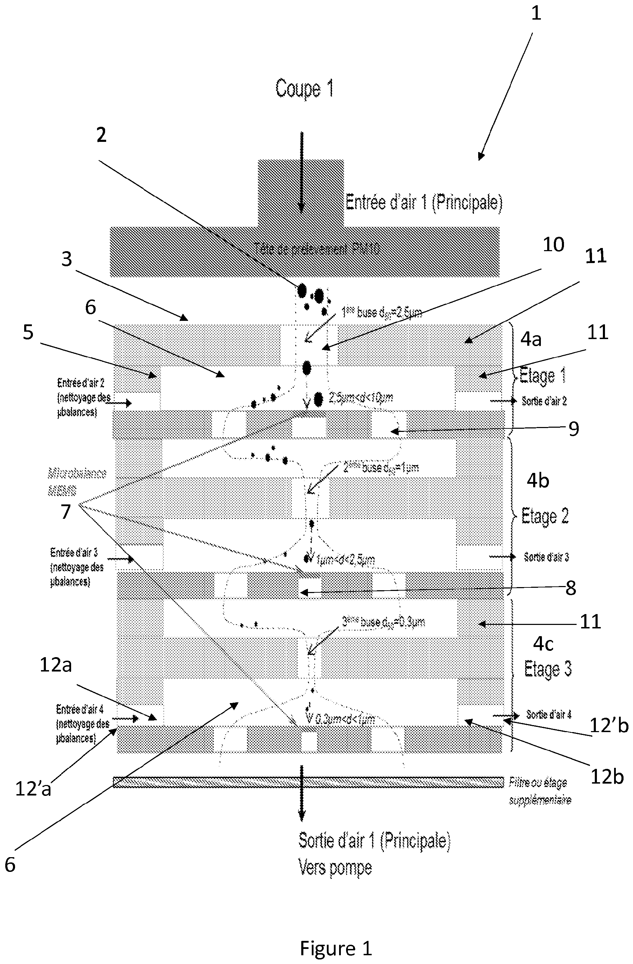

La présente invention présente un capteur 1 pour l'analyse in-situ et en continu d'un flux d'aérosol permettant la mesure de la masse des particules microniques/submicroniques 2 en suspension dans le flux d'air et représenté sur les figures 1 à 3.

Ce capteur 1 comprend un dispositif de tri aéraulique permettant d'effectuer la granulométrie des particules 2 selon leur taille tout en intégrant les systèmes de mesure.

Le dispositif de tri aéraulique selon l'invention présente :

- un corps d'impacteur 3 à cascade d'un ou de plusieurs étages 4a, 4b, 4c, présentant en entrée une tête de prélèvement des particules (la taille, plus particulièrement le diamètre aérodynamique qui correspond au diamètre moyen, de ces particules étant avantageusement inférieure à 10 micromètres, soit des particules dénommées dans l'état de l'art PM10), suivie d'une conduite 6 d'écoulement formée pour chaque étage et suivant le sens de l'écoulement de l'aérosol : d'au moins une buse axiale 10, suivie d'ouvertures latérales 9 à la buse axiale pour permettre l'écoulement du flux d'aérosol; le diamètre des buses axiales 10, avantageusement d'une à plusieurs centaines de micromètres, étant choisi pour permettre le contrôle du débit du flux d'aérosol et le tri des particules 2 selon leur inertie ; la conduite 6 est également formée de parois 5 s'étendant dans la longueur du corps d'impacteur 3 entre la buse axiale 10 et les ouvertures latérales 9.

Le capteur 1 présente aussi :

- au moins une microbalance MEMS 7 par étage 4, avec une membrane oscillante 7a en silicium à actionnement de préférence électrostatique située sur la zone d'impaction des particules 2 en regard d'une buse axiale et entre deux ou plusieurs ouvertures latérales 9; cette microbalance MEMS 7 est particulièrement destinée à la mesure d'un décalage, de préférence de l'ordre de quelques dizaines de hertz, de la fréquence d'oscillation pour déterminer la masse inférieure ou égale au microgramme de l'ensemble des particules 2 déposées sur la microbalance MEMS 7 ;
- des moyens de calcul reliés à chaque microbalance MEMS 7 pour déterminer la masse de l'ensemble des particules 2 sur la zone d'impaction, fonction du décalage entre la fréquence d'oscillation de la membrane oscillante 7a avec particules 2 et la fréquence d'oscillation de la membrane sans particules 2 ;
- un système de nettoyage des microbalances MEMS permettant l'évacuation des particules 2 hors des microbalances MEMS ;
- des moyens d'entrainement du flux d'aérosol.

Le système de nettoyage permet au capteur de fonctionner en continu/temps réel, les microbalances MEMS 7 étant nettoyées avant toute nouvelle mesure du capteur 1.

A titre uniquement d'exemple et de façon non limitative, il peut être choisi des pas de temps de toutes les heures, tous les quarts d'heure, toutes les minutes, toutes les 10 secondes, pour réaliser le nettoyage, permettant ainsi des mesures périodiques, des mesures temps réel ou quasi-réel. Cela va typiquement dépendre de : des concentrations rencontrées ; de l'usage fait du système.

Si la régénération d'un capteur est un problème identifié est connu, la difficulté est de l'intégrer et de la faire fonctionner in situ sans intervention de « maintenance » sur le capteur et sans l'endommager. Il est décrit dans l'état de l'art l'utilisation d'un fluide supercritique ce qui est inapplicable sans maintenance sur le capteur et donc pour le présent système intégré de l'invention.

La solution que nous proposons est facile à mettre oeuvre et pourra être combinée avec une action mécanique (en faisant vibrer la membrane verticalement ou horizontalement à une fréquence supérieure à la fréquence de détachement des particules) ou avec une action thermique (en intégrant des éléments résistifs sous la membrane.

Le schéma de principe du système est présenté sur les figures 1, 2 et 3.

La tête de prélèvement (filtre avec ouverture, vortex ou autre système de l'état de l'art) permet de ne laisser passer que les particules PM10, c'est-à-dire les particules dont la taille, en particulier le diamètre est inférieur à 10 micromètres (PM10). Une description et une mesure des particules PM10 est en particulier détaillée dans la norme NF EN 12341.

Le diamètre des buses axiales à chaque étage de prélèvement peut être de l'ordre de quelques centaines de micromètres avec des débits de 1 à plusieurs L/min. Ainsi, ce débit correspond sensiblement au débit ventilatoire humain qui est entre de 5 à 10L/min alors que des débits < 0,3 L/min comme ceux du système décrit par Maldona-Garcia et al, 2017 - IEEE SENSORS JOURNAL, Vol. 17, No. 6, Mars 15, 2017 sont peu représentatifs. Cela correspondant en outre à des diamètres de coupure compris entre 100 nm et quelques $\mu$m (e.g. 10 $\mu$m) afin de mesurer des particules dont le diamètre moyen est inférieur à 10 micromètres. Par exemple afin de mesurer des particules de quelques 100nm à 10$\mu$m, de préférence des particules PM10 présentant un diamètre d'au moins 100nm, de façon plus préférée d'au moins 200nm.

Le but étant de fournir un dispositif compatible avec les normes de l'OMS concernant les catégories de particules (PM) à mesurer et leurs valeurs seuil. Notamment, ce dispositif permet ainsi la mesure de la fraction thoracique en particules.

A l'aide de l'impacteur en cascade, les particules 2 de différents diamètres sont impactées à différents étages 4a, 4b, 4c du système et mesurées à l'aide de microbalance MEMS 7 situées au niveau des zones d'impaction.

En effet, selon le diamètre d'ouverture d'un impacteur le flux d'air chargé en particules va être plus ou moins accéléré, les particules 2 de plus faible inertie vont suivre le flux d'air alors que celles de plus grande inertie vont s'impacter sur une zone située sous une buse d'écoulement du flux d'aérosol située en regard de microbalance MEMS 7.

Chaque étage 4a, 4b, 4c présente sur un même plan :

- au moins un évidement axial 8 traversant ou non traversant (par exemple une encoche dans la tranche de silicium) situé sous chaque microbalance pour suspendre la membrane 7a, et
- des ouvertures latérales 9 destinées à l'écoulement du flux d'aérosol situées de part et d'autre de l'évidement axial 8, et à chaque entrée d'étage une buse axiale 10 située sous l'évidement axial 8.

Avantageusement, les ouvertures latérales 9 sont disposées symétriquement par rapport à l'évidement axial 8 situé de façon centrale dans le corps d'impacteur 3.

Les buses axiales 10 et les évidements axiaux 8 sont de taille décroissante suivant l'axe de l'écoulement de l'aérosol de manière à impacter des particules 2 de taille décroissante à chaque étage.

Ici, il peut être choisi par exemple un diamètre et un nombre d'ouvertures latérales 9 situées dans le passage d'écoulement pour permettre d'impacter :

- les particules 2 entre 10 micromètres et 2,5 micromètres à un premier étage ; et
- les particules 2 entre 2,5 micromètres et un micromètre, à un second étage ; et
- les particules 2 entre un micromètre et 0,3 micromètre à un troisième étage, suivant le sens de l'écoulement du flux d'aérosol.

Le corps d'impacteur 3 peut présenter un empilement modulaire comportant des tranches 11 de silicium ou d'autres matériaux micro/nano structurés, par exemple par des moyens de micro ou nano fabrication en salle blanche, en appui et fixées entre elles.

Par exemple, les autres matériaux envisageables sont : verre, aluminium.

Si la conduite 6 en silicium ou autre matériau micro/nano structurée, elle peut être recouverte d'un métal conducteur.

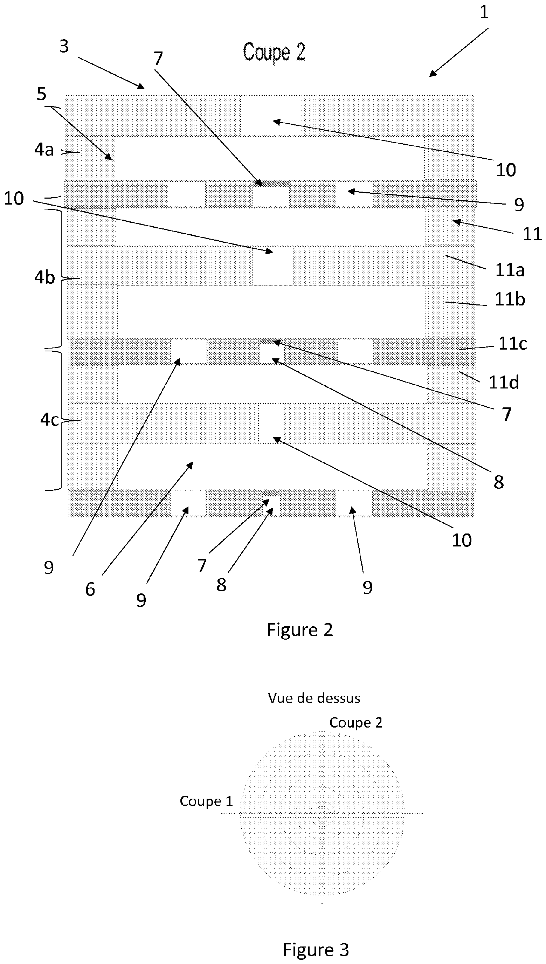

Ici sur la figure 2, chaque étage 4a, 4b, 4c présente quatre tranches 11:

- une première tranche 11a avec une buse axiale 10 ;
- une deuxième tranche 11c avec un évidement axial 8 et des ouvertures latérales 9 d'écoulement du flux d'aérosol le long du corps d'impacteur, cet écoulement étant axial par la buse axiale 10 et s'étirant radialement pour atteindre les ouvertures latérales 9 après sa sortie de la buse axiale 10 ;
- deux tranches 11b, 11d dites « intercalaires » se disposant entre la première tranche 11a et la deuxième tranche 11c.

Ici sur la figure 1, le système de nettoyage des microbalances MEMS est réalisé par des canaux latéraux d'entrée 12a et des canaux latéraux de sortie 12b dans les tranches de silicium intercalaires et débouchant dans la conduite 6 par des entrées d'air latérales 12'a et 12'b, et des moyens de circulation d'un fluide tel que de l'air dans ces canaux 12a et 12b.

Les canaux latéraux d'entrée 12a et des canaux latéraux de sortie 12b communiquent fluidiquement avec la conduite 6 de passage de l'écoulement pour faire circuler un fluide de nettoyage, tel que de l'air ou solvant ou solvant+air, sur les microbalances MEMS, depuis les canaux latéraux d'entrée 12a vers les canaux latéraux de sortie 12b.

Ils débouchent sur la surface plane de l'étage 4a, 4b, 4c, qui comporte les ouvertures axiales 8 et les microbalances MEMS 7.

Les canaux latéraux d'entrée 12a et des canaux latéraux de sortie 12b de chaque étage 4a, 4b, 4c sont situés entre une tranche de silicium dite « intercalaire » 11b, 11d et la première tranche 11a de silicium.

En variante non représentée sur la figure 2, le système de nettoyage des microbalances MEMS comporte un élément chauffant.

Dans une deuxième variante, le système de nettoyage des microbalances MEMS comporte la membrane oscillante 7a.

Dans l'invention le système de nettoyage présente une combinaison d'au moins deux des trois dispositifs suivants :

- les canaux latéraux d'entrée 12a et des canaux latéraux de sortie 12b;
- l'élément chauffant situé au niveau de la zone d'impaction
- la membrane oscillante 7a ; dans ce cas la membrane 7a est pilotée par des moyens de commande pour vibrer à une certaine fréquence afin d'évacuer les particules, à une période voulue.

Les moyens de commande et d'entrainement de l'écoulement aérosol sont par exemple une ou plusieurs pompes.

Dans une variante non représentée sur les schémas, le corps d'impacteur 3 du capteur 1 présente des moyens d'ouverture/fermeture :

- des ouvertures latérales 9 et éventuellement des évidements axiaux 8 s'ils sont traversants ;
- et/ou des buses axiales 10.

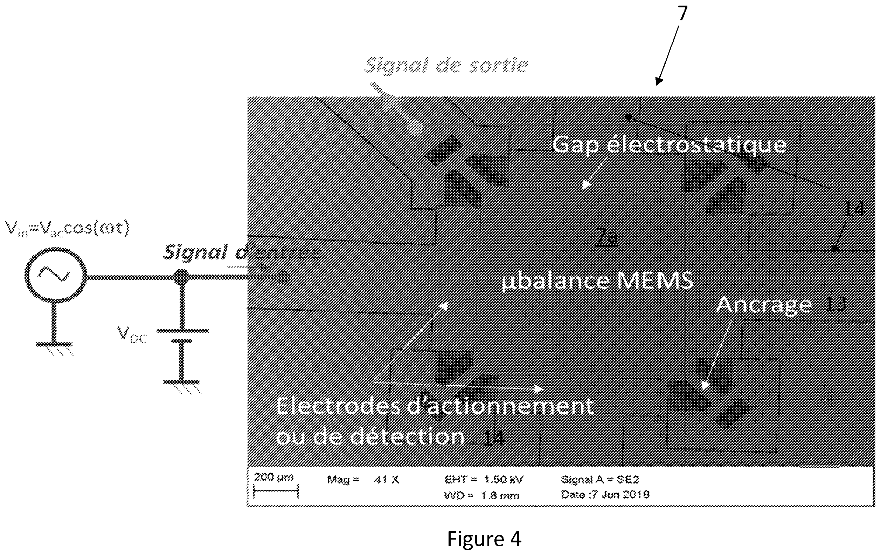

Les membranes 7a en silicium à actionnement électrostatique (figure 4) des microbalances développées sont mises en vibration à leur résonance selon un mode de déformation présentant un fort facteur de qualité.

L'actionnement des membranes peut aussi être : piézoélectrique ou magnétique.

Chaque membrane 7a est suspendue à plusieurs ancrages 13, de préférence en silicium, auxquels elle est fixée tendue, la membrane 7a étant disposée entre plusieurs électrodes 14 aptes à l'actionnement électrostatique ou la mesure. Avantageusement, la membrane est entourée sur son pourtour par les électrodes.

Ici sur la figure 4, il a été réalisé quatre électrodes 14 qui peuvent être en silicium dopé, alimentées par un signal d'entrée, et récupérant un signal de sortie.

Dans le cas où l'actionnement est électrostatique, une tension alternative combinée à une tension continue est amenée sur une ou plusieurs électrodes 14 d'actionnement alors que la membrane 7a suspendue est maintenue à un potentiel électrostatique nul. Une force électrostatique oscillante à la même fréquence que la tension électrique d'actionnement est ainsi induite sur la membrane 7a.

Celle-ci va alors se déformer en suivant un mouvement oscillatoire planaire. La membrane 7a étant chargée électrostatiquement, le mouvement de celle-ci induit un mouvement de charge et donc un courant proportionnel à la vitesse de déplacement de la membrane 7a.

Ce courant peut être mesuré via des contacts liés aux ancrages 13 de la membrane 7a ou liés à une électrode ne servant pas à l'actionnement. Il existe des fréquences particulières d'actionnement pour lesquelles l'amplitude de déformation de la membrane 7a est maximum.

Pour une fréquence de résonance, le courant mesuré à cette fréquence est maximal. Avec un ajout de masse, cette fréquence de résonance mécanique va varier.

La mesure de la fréquence de résonance permet donc de connaître la masse déposée.

Avantageusement, la surface des membranes 7a des microbalances MEMS 7 peut être pour permettre de contrôler l'adhésion et/ou de la séparation (alternativement mouillage / démouillage du fluide de nettoyage) des particules 2 :

- micro/nano structurée et/ou
- fonctionnalisée

favorisant l'adhésion des particules 2 sélectivement selon leurs propriétés de surface.

Eventuellement elle peut présenter de propriétés électrostatiques/mécaniques ou thermiques pour permettre de contrôler l'adhésion et/ou de la séparation des particules 2, lorsqu'elles sont chargées. Par exemple une possibilité si certains aérosols sont chargés négativement et d'autre plutôt positivement, utiliser les propriétés électrostatiques peut également permettre d'améliorer l'efficacité de dépôt.

Une ou plusieurs couches de matériau peuvent être disposées sur la surface des membranes 7a des microbalances MEMS, de façon à permettre une adhérence préférentielle de particules 2 cibles.

En fonction des applications, la surface des membranes 7a est configurée de façon différente.

Par exemple, elle peut être optimisée pour détecter préférentiellement la masse des aérosols biologiques, pollens, fongiques, bactériens grâce à leurs propriétés spécifiques de surfaces.

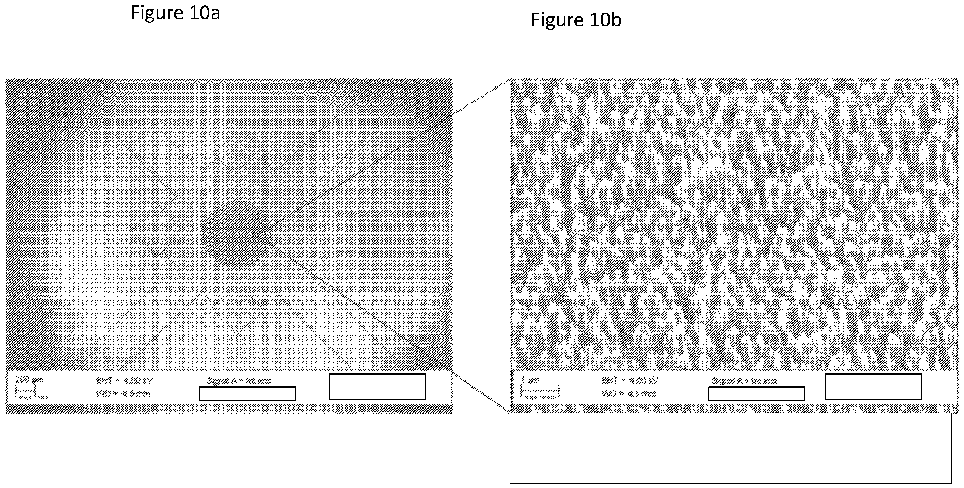

La surface des membranes 7a des microbalances MEMS peut être du silicium micro ou nanostructurée, tel que le silicium noir (illustré sur les figures 10a et 10b). Avantageusement, la surface des membranes peut être recouverte d'un polymère. Dans un mode de réalisation particulier, la surface de la membrane 7a est du silicium noir recouvert d'une fine couche de polymère pour, par exemple, influer sur l'adhérence de particules 2 cibles à la membrane 7a ou le comportement de particules 2 cibles vis-à-vis de la membrane 7a.

La membrane oscillante 7a a été réalisée comme illustré sur l'image de la figure 4.

Les dimensions de la membrane oscillante 7a sont comprises en largeur entre plusieurs centaines de microns et plusieurs millimètres. C'est à dire au moins 1 00μm, voire 200 μm, 300 μm, 400 μm, de manière préférée au moins 500 μm. En outre, la membrane oscillante 7a peut présenter une largeur d'au plus 10 millimètres, de préférence d'au plus 5 millimètres. Les dimensions d'épaisseur peuvent être comprises par exemple entre 30 μm et 50 μm ou entre 35 μm et 45 μm.

Pour chaque microbalance MEMS 7, la distance entre la membrane oscillante 7a et des actionneurs électrostatiques qui sont les électrodes est inférieure ou égale à 1 micromètre.

La membrane oscillante 7a est de façon préférée une membrane rectangulaire ou carrée. La membrane oscillante 7a est avantageusement une membrane rectangulaire.

Elle peut présenter aussi une forme circulaire ou avec toute autre forme.

Les membranes oscillantes 7a des microbalances MEMS 7 sont conformées pour présenter :

- un facteur de qualité Q supérieur à 15000 ; ce facteur de qualité étant obtenu par l'utilisation du silicium, d'un mode de déformation de la microbalance bien choisi, et d'une forme des ancrages 13 ; avec

$$m_{min} = \frac{m}{Q}$$

, m_{min} étant la masse minimum détectable des particules solides à mesurer par la microbalance, et m la masse de la membrane ou surface active
- des masses m comprises entre 5 et 100 μg.

Les fréquences des membranes 7a des microbalances MEMS sont avantageusement comprises entre 1 et 20 MHz.

Avantageusement, la microbalance MEMS 7 est configurée pour permettre la mesure de masse des particules 2 entre l'attogramme et le nanogramme.

La résolution ou précision de la microbalance MEMS 7 dans la mesure de la masse est le nanogramme, en raison des choix réalisés de prendre du silicium, avec un mode de déformation spécifique de la membrane 7a, et une forme particulière des ancrages 13, qui permettent de maximiser le facteur de qualité du résonateur tout en gardant une surface active large.

Par la géométrie de la microbalance (en particulier carré), son type d'actionnement (électrostatique) et son mode de déformation (selon un mode de volume dans le plan) en mode de Lamé ou extensionnel qui permet de garantir de hautes fréquences d'utilisation (de quelques MHz) tout en conservant une large surface active (de l'ordre du mm²). Une large surface active peut par exemple correspondre à une surface active de 100 μm² à 10 mm², par exemple entre 200 μm² et 9 mm², entre 200 μm² et 6 mm², entre 200 μm² et 4 mm², entre 500 μm² et 2 mm²).

La microbalance ainsi obtenue démontre un haut facteur de qualité et donc une bonne sensibilité (environ 50 Hz/ng) tout en pouvant mesurer un grand nombre de particules de diamètre allant de 0,1 à 10 μm sans saturation (correspondant à des concentrations massiques allant de quelques ng/m³ à quelques 10μg/m³).

Ainsi, la microbalance est particulièrement destinée à la mesure d'un décalage de seulement quelques dizaines de Hertz autour de la fréquence d'oscillation mécanique d'un à plusieurs MHz de la membrane. Plus particulièrement, la fréquence d'oscillation mécanique de la membrane est comprise entre 1 MHz et 20 MHz, encore plus particulièrement la fréquence d'oscillation mécanique de la membrane est comprise entre 1 MHz et 20 MHz et la mesure du décalage est quelques dizaines de Hertz autour de la fréquence d'oscillation mécanique de la membrane, par exemple d'environ 50Hz.

Le mode de déformation selon un mode de volume dans le plan signifie que les déformations élastiques ne se font pas localement en surface mais sont simultanées dans toute l'épaisseur de la membrane. Ici les déformations sont dans le plan autrement dit la déformation n'est pas verticale par rapport à la surface active mais horizontales. Par ailleurs, l'actionnement électrostatique permet de positionner les électrodes non pas sur la surface active de la membrane MEMS, mais à l'extérieur de celle-ci et agissent sur l'épaisseur de la surface active pour la déformer.

Ainsi, ces électrodes à l'extérieur provoquent alternativement l'extension puis la contraction de la membrane dans les directions horizontales de la surface active, la membrane avec sa surface active et son épaisseur se déplaçant uniquement selon les directions horizontales de la surface active

Ainsi, la membrane MEMS n'est pas actionnée hors plan (suivant la direction de l'épaisseur de la surface active).

Le capteur peut présenter des moyens de contrôle et de communication (filaire ou radio), électroniques ou logiciels, ad hoc permettant à l'utilisateur l'acquisition, la visualisation, l'exploitation des données, intégrés à l'instrument ou déportés.

Ces moyens permettent notamment l'intégration du capteur ou d'un système présentant un ensemble de capteurs dans un système de contrôle de la qualité de l'air d'un bâtiment.

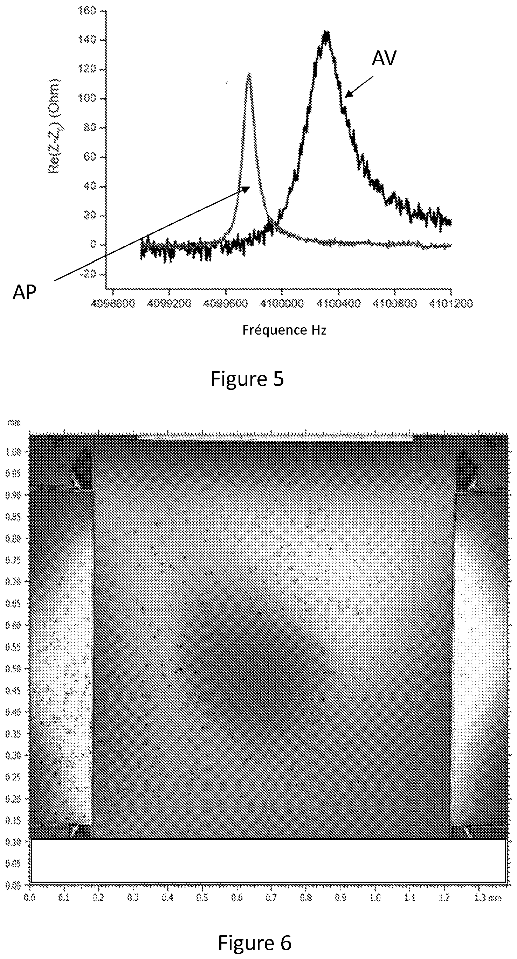

La figure 5 montre le décalage de fréquence de la membrane oscillante 7a suite au dépôt des particules 2 solides microniques/submicroniques en suspension dans le flux d'air.

La figure 6 montre les impacts des particules 2 sur la membrane 7a.

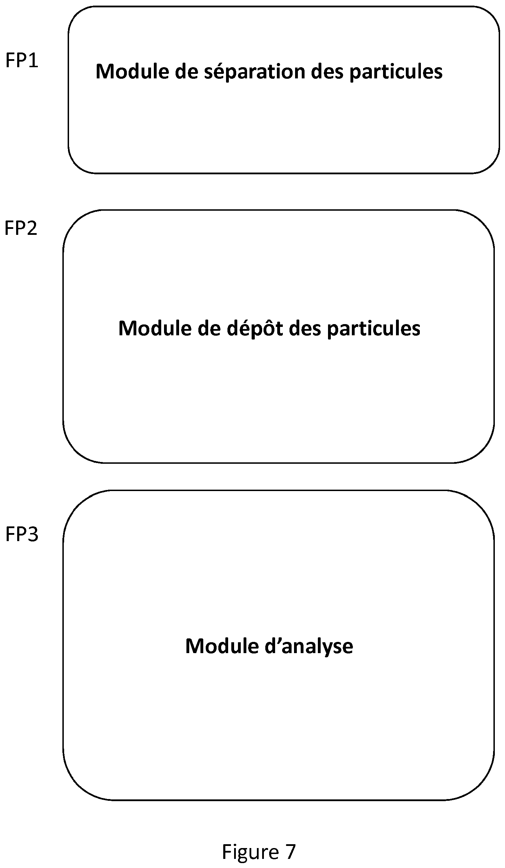

La figure 7 représente les fonctions principales du dispositif selon l'invention. Ainsi selon un mode de réalisation le dispositif comprend un module de séparation des particules FP1, un module de dépôt des particules FP2, un module d'analyse FP3.

Avantageusement le module de séparation FP1 comprend une tête de sélection, par exemple une tête PM10. Le module de séparation FP1 des particules permet de trier les particules de préférence selon leur inertie, par exemple en fonction de leur taille, et cela sur plusieurs étages d'impaction.

Le module de dépôt des particules FP2 permet l'adhésion des particules. En outre, le module de dépôt des particules est configuré pour cibler une zone d'intérêt sur le capteur MEMS. Ainsi, le module de dépôt des particules FP2, présente une zone d'intérêt ciblée sur le capteur MEMS. De plus, le module de dépôt des particules est configuré pour l'adhésion des particules par fonctionnalisation et/ou micro/nano structuration de la surface du MEMS. Avantageusement, le module de dépôt des particules est configuré pour la régénération du capteur comprenant l'auto-nettoyage par exemple par flux d'air, par vibration, température.

Le module d'analyse FP3 peut être configuré pour mesurer la fréquence de résonance des capteurs MEMS avant et après le dépôt de particules.

Le module d'analyse FP3 peut également être configuré pour déterminer la masse des particules déposées sur les MEMS en fonction du décalage de la fréquence. Avantageusement, ce module d'analyse FP3 permet un traitement du signal automatisé. Ce module d'analyse permet également une analyse *in-situ* et en continu.

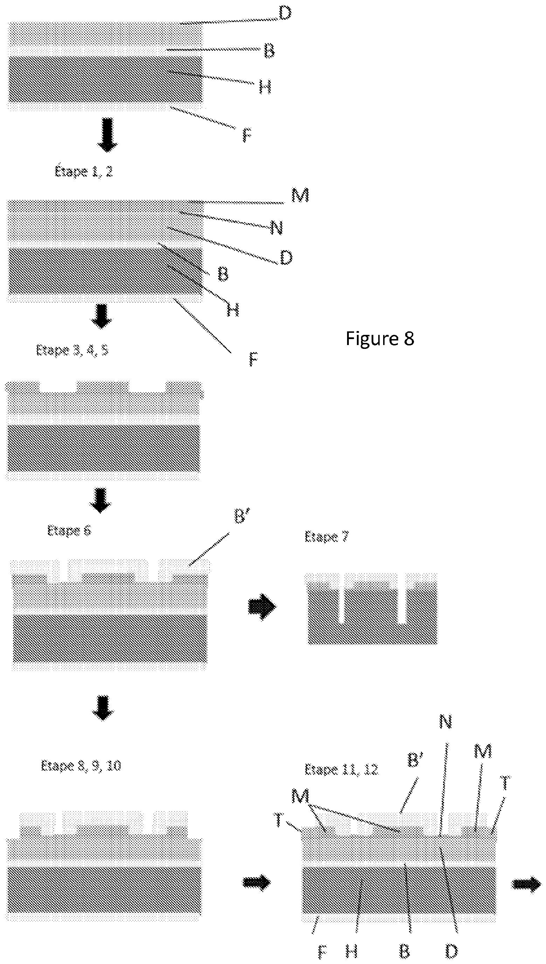

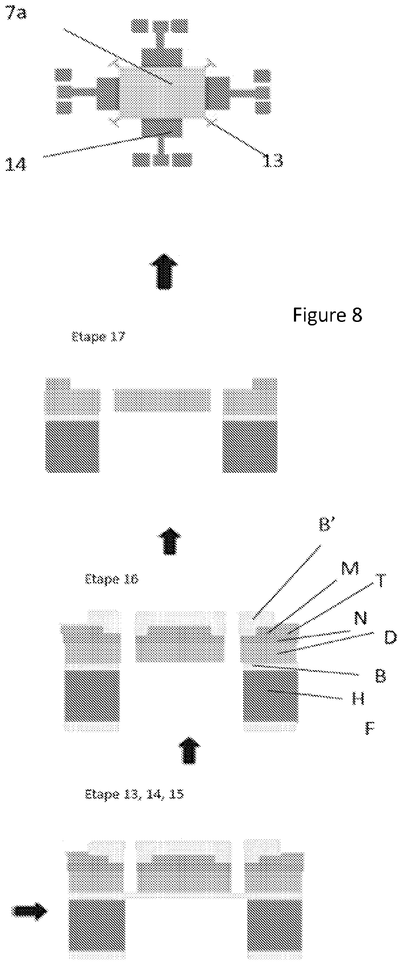

Les microbalances MEMS 7 sont réalisées par des procédés de microfabrication en salle blanche, dont les étapes sont schématisées sur la figure 8.

Comme représenté figure 8, elles sont fabriquées à partir de plaques de SOI (en anglais « Silicon On Insulator » soit en français « Silicium sur isolant ») comportant un empilement de Silicium monocristallin poli de plusieurs dizaines de micromètres d'épaisseur appelée « Device » par la suite « D », d'une couche d'oxyde de Silicium SiO₂ appelée « Box », par la suite « B » ou « B' », de quelques micromètres d'épaisseur, et d'une couche de Silicium monocristallin poli de plusieurs centaines de micromètres d'épaisseur appelée « Handle », par la suite « H », et d'une face arrière d'oxyde, nommée F sur la figure 8, de 2 micromètres .

La couche D est formée de Silicium dopé très faiblement résistif électriquement afin de garantir l'actionnement électrostatique des membranes 7a. La couche H est formée de Silicium fortement résistif pour éviter les court-circuits. La membrane 7a formant la microbalance MEMS 7 est structurée dans l'épaisseur de la couche D.

Une couche de nitrure de Silicium Si₃N₄ de cent nanomètre d'épaisseur environ (nommée N) puis une couche de Silicium polycristallin d'épaisseur micrométrique (nommée M) sont déposées par LPCVD (en anglais « Low Pressure Chemical Vapor Déposition », soit en français « Dépôt chimique en phase vapeur à faible pression ») au cours des étape 1 et 2.

Une résine photosensible est déposée sur la face supérieure du SOI et une photolithographie est ensuite réalisée pour définir la structure de la membrane 7a et des électrodes 14 dans la résine au cours des étapes 3 et 4. A cette étape l'écart entre les motifs des électrodes 14 d'actionnement et celui de la membrane sont de l'ordre de deux micromètres.

Les motifs sont ensuite transférés dans la couche de Polysilicium par gravure dans un bâti de RIE (en anglais « Reactive Ion etching », soit en français « Gravure ionique réactive ») dans une étape 5.

La plaque de SOI est ensuite placée dans un four à haute température (1100°C) pendant plusieurs heures afin de réaliser l'oxydation du Polysilicium, dans une étape 6.

A l'issue de cette oxydation, un oxyde de Silicium de presque deux microns d'épaisseur a été formé et les ouvertures entre les motifs d'actionnement et le motif de la membrane ont été réduites à quelques centaines de nanomètres.

Au cours des étapes 8 et 9, une photolithographie, suivie d'une gravure DRIE (en anglais « Deep Reactive Ion etching », soit en français « Gravure ionique réactive profonde») sont réalisées pour ouvrir la couche d'oxyde là où les contacts électriques seront déposés.

Dans une étape 10, ces motifs sont ensuite transférés par gravure RIE dans le Silicium polycristallin puis le nitrure de Silicium.

Par ailleurs, comme schématisé dans l'étape 7, les paramètres des étapes 1 à 6 ainsi que ceux de la gravure DRIE du silicium D ont été préalablement optimisés sur des plaques de test afin d'obtenir des ouvertures de gap submicroniques.

Au cours des étapes 11 et 12, une photolithographie suivie d'un dépôt d'Aluminium nommé « T », par pulvérisation et d'un décollement à l'acétone permettent de former les plots de contacts en Aluminium pour les entrées et sorties de signaux électriques.

Dans une étape 13, une photolithographie est réalisée sur la face arrière du SOI pour définir des zones d'ouverture sous la membrane.

Ce motif est transféré dans l'oxyde de Silicium de la face arrière par gravure DRIE dans une étape 14.

Les motifs de membrane et d'électrode sont transférés dans la couche D par une gravure DRIE, dans une étape 15

Une dernière étape de DRIE de la face arrière permet de transférer la zone d'ouverture sous la membrane dans la couche H.

L'oxyde de Silicium exposé est ensuite dissout par une gravure à la vapeur d'acide fluorhydrique (HF) dans une étape 16. La membrane est désormais suspendue.

Le reste de polysilicium et de nitrure sont enfin nettoyés par gravure RIE dans une étape 17.

**Revendications**

1. Capteur (1) pour l'analyse in-situ et en continu d'un flux d'aérosol, permettant la mesure en continu de la concentration massique par gamme de taille des particules microniques ou submicroniques (2) en suspension dans le flux d'air, comprenant :

- un dispositif de tri aéraulique permettant d'effectuer la granulométrie des particules (2) selon leur taille avec un corps d'impacteur (3) à cascade de plusieurs étages,

chaque étage étant formé d'au moins :

• une buse axiale (10) par laquelle entre l'écoulement dans l'étage, et
• d'ouvertures latérales (9) ;

le diamètre et le nombre d'ouvertures latérales (9) et de la buse axiale (10) étant choisis pour permettre le contrôle du débit du flux d'aérosol et le tri des particules (2) selon leur inertie à chaque étage ;

• une conduite d'écoulement formée de parois s'étendant dans la longueur du corps d'impacteur entre la buse axiale et les ouvertures latérales ;
• au moins une microbalance MEMS (7) par étage, située à distance et en regard de la buse axiale (10), dont la surface active est située sur la zone d'impaction des particules (2) entre les ouvertures latérales (9) qui laissent passer l'écoulement;

la au moins une microbalance MEMS comportant une membrane oscillante en silicium (7a) configurée pour déterminer la masse inférieure ou égale au microgramme de l'ensemble des particules (2) déposées;

• au moins un évidement axial (8) situé sous chaque membrane oscillante (7a) afin de la suspendre, les ouvertures (9) étant latérales à l'évidement axial (8) et destinées à l'écoulement du flux d'aérosol et situées de part et d'autre de l'évidement axial (8),

- des moyens de calcul reliés à chaque microbalance MEMS (7) pour déterminer la masse de l'ensemble des particules (2) sur la zone d'impaction;
- des moyens d'entrainement du flux d'aérosol, **caractérisé en ce que**
- en entrée une tête de prélèvement des particules laisse passer seulement les particules PM10 ;
- un système de nettoyage de chaque microbalance MEMS , de préférence à chaque étage, permettant l'évacuation des particules hors de la microbalance MEMS, le système de nettoyage comprend au moins un des dispositifs suivants :

o des canaux d'entrée (12a) et des canaux latéraux de sortie (12b) débouchant dans la conduite (6), et des moyens de circulation d'un fluide de nettoyage tel que de l'air ou du solvant dans ces canaux (12a, 12b), les canaux latéraux d'entrée (12a) et des canaux latéraux de sortie (12b) communiquant fluidiquement avec la conduite (6) et étant disposés de sorte à faire circuler le fluide de nettoyage sur la surface des membranes (7a),
o un élément chauffant situé au niveau de la zone d'impaction ;
o la membrane oscillante (7a) ;

dans le cas où le système de nettoyage présente une combinaison d'au moins deux des trois dispositifs, la membrane (7a) est pilotée par des moyens de commande pour vibrer à une certaine fréquence afin d'évacuer les particules, à une période voulue ; et
- la au moins une microbalance MEMS (7) comportant comme surface active une membrane oscillante (7a) en silicium à actionnement électrostatique, ladite membrane oscillante étant :

o de dimension comprise en largeur entre plusieurs centaines de microns et plusieurs millimètres,
o suspendue à plusieurs ancrages (13) en silicium auxquels elle est fixée tendue,
o disposée entre plusieurs électrodes (14) aptes à l'actionnement électrostatique,
o configurée pour présenter un facteur de qualité Q supérieur à 15000, et une masse m comprise entre 5 et 100 $\mu$g,
o configurée pour présenter des fréquences d'oscillation de la membrane (7a) comprises entre 1 et 20 MHz, et
o configurée pour permettre de contrôler l'adhésion et/ou la séparation des particules (2) à sa surface par micro/nano structuration ou fonctionnalisation physico-chimique.

2. Capteur (1) selon l'une des revendications précédentes, dans lequel la membrane oscillante (7a) est une membrane rectangulaire ou carrée et apte à se déformer dans son plan en mode de Lamé ou extensionnel.

3. Capteur (1) selon l'une des revendications précédentes, dans lequel les moyens d'entrainement du flux d'aérosol, sont configurés pour permettre un débit d'un à plusieurs L/min, et dans lequel les buses axiales à chaque étage présentent une ouverture d'une à plusieurs centaines de micromètres.

4. Capteur (1) selon l'une des revendications précédentes, dans lequel une tension alternative combinée à une tension continue est amenée sur une ou plusieurs électrodes (14) d'actionnement alors que la membrane suspendue (7a) est maintenue à un potentiel électrostatique nul de façon à déformer la membrane, la membrane (7a) étant chargée électrostatiquement, le mouvement de celle-ci induisant un mouvement de charge et donc un courant mesuré via des contacts liés aux ancrages (13) de la membrane oscillante (7a) ou liés à une électrode (14) ne servant pas à l'actionnement.

5. Capteur (1) selon l'une des revendications précédentes, dans lequel la membrane oscillante (7a) présente une surface d'un à plusieurs mm$^2$.

6. Capteur (1) selon l'une des revendications précédentes, dans lequel la surface de la membrane oscillante (7a) est du silicium noir.

7. Capteur (1) selon la revendication précédente, dans lequel la surface de la membrane (7a) est recouverte d'une fine couche de polymère.

8. Capteur (1) selon l'une des revendications précédentes, dans lequel le corps d'impacteur (3) présente un empilement de tranches (11) de silicium ou d'autres matériaux micro/nano structurés, en appui et fixées entre elles.

9. Capteur (1) selon l'une des revendications précédentes, dans lequel le diamètre et le nombre des ouvertures latérales (9) et de chaque buse axiale (10) sont choisis pour permettre le contrôle du débit du flux d'aérosol et le tri des particules (2) PM10, de préférence d'un diamètre de 300 nm à 10 μm, selon leur inertie à chaque étage afin de mesurer notamment une fraction thoracique en particules.

10. Capteur (1) selon l'une des revendications précédentes, dans lequel le système de nettoyage des microbalances MEMS comporte un élément chauffant situé sous chaque membrane oscillante (7a) et/ou dans le corps d'impacteur (3) à chaque étage.

11. Capteur (1) selon l'une des précédentes revendications, dans lequel le système de nettoyage des microbalances MEMS comporte la membrane oscillante (7a) destinée à osciller à une fréquence comprise entre 1 et 20 MHz permettant la séparation des particules de la membrane oscillante (7a) lors du nettoyage.

12. Capteur (1) selon l'une des revendications précédentes, dans lequel le corps d'impacteur (3) présente des moyens d'ouverture/fermeture :

   - des ouvertures axiales (9) ;
   - et/ou des buses axiales (10) ;

   pour contrôler le débit du flux d'aérosol s'écoulant dans le corps d'impacteur (3).

13. Capteur (1) selon l'une des revendications précédentes, dans lequel le diamètre et le nombre d'ouvertures latérales (9) permettant l'écoulement est déterminé pour impacter :

   - les particules (2) entre 10 micromètres et 2,5 micromètres ou plus, à un premier étage ; et
   - les particules (2) entre 2,5 micromètres et un micromètre à un second étage ; et
   - les particules (2) entre un micromètre et 0,3 micromètres à un troisième étage, suivant le sens de l'écoulement du flux d'aérosol.

14. Capteur (1) selon l'une des revendications précédentes, dans lequel les dimensions de la membrane oscillante (7a) sont comprises en largeur entre 500 microns et plusieurs millimètres.

15. Capteur (1) selon l'une des revendications précédentes, dans lequel la microbalance MEMS (7) est de géométrie carrée et est configurée pour permettre la mesure de masse des particules (2) entre l'attogramme et le nanogramme.

**Patentansprüche**

1. Sensor (1) zur In-situ- und kontinuierlichen Analyse eines Aerosolstroms, der die kontinuierliche Messung der Massenkonzentration pro Größenbereich der im Luftstrom suspendierten Mikro- und Submikro-Partikel (2) ermöglicht, umfassend:

   - eine lufttechnische Sortiervorrichtung, die es ermöglicht, mit einem mehrstufigen Kaskadenimpaktorkörper (3) die Granulometrie der Partikel (2) nach ihrer Größe vorzunehmen,

wobei jede Stufe gebildet wird von mindestens:

• einer axialen Düse (10), durch die die Strömung in die Stufe eintritt, und
• seitlichen Öffnungen (9);

wobei der Durchmesser und die Anzahl seitlicher Öffnungen (9) und der axialen Düse (10) so gewählt sind, dass sie die Steuerung des Durchflusses des Aerosolstroms und die Sortierung der Partikel (2) nach ihrer Trägheit auf jeder Stufe ermöglichen;

• einer Strömungsleitung, die von Wänden gebildet wird, die sich in der Länge des Impaktorkörpers zwischen der axialen Düse und den seitlichen Öffnungen erstrecken;
• mindestens einer MEMS-Mikrowaage (7) pro Stufe, die sich in Abstand von und der axialen Düse (10) zugewandt befindet, deren aktive Fläche sich auf der Impaktionszone der Partikel (2) zwischen den seitlichen Öffnungen (9), die die Strömung durchlassen, befindet;

wobei die mindestens eine MEMS-Mikrowaage eine Schwingmembran (7a) aus Silizium umfasst, die so konfiguriert ist, dass sie die Masse kleiner oder gleich einem Mikrogramm der Gesamtheit der abgeschiedenen Partikel (2) bestimmt;

• mindestens einer axialen Aussparung (8), die sich unter jeder Schwingmembran (7a) befindet, um diese aufzuhängen, wobei die Öffnungen (9) seitlich der axialen Aussparung (8) liegen und für die Strömung des Aerosolstroms bestimmt sind und sich beiderseits der axialen Aussparung (8) befinden,

- Rechenmittel, die mit jeder MEMS-Mikrowaage (7) verbunden sind, um die Masse der Gesamtheit der Partikel (2) auf der Impaktionszone zu bestimmen;
- Strömungsmittel für den Aerosolstrom,

**dadurch gekennzeichnet, dass**

- am Einlass ein Kopf zur Entnahme der Partikel nur die PM10-Partikel durchlässt;

- ein System zur Reinigung jeder MEMS-Mikrowaage, vorzugsweise auf jeder Stufe, das Abführen der Partikel aus der MEMS-Mikrowaage ermöglicht,

wobei das Reinigungssystem mindestens eine der folgenden Vorrichtungen umfasst:

o Einlasskanäle (12a) und seitliche Auslasskanäle (12b), die in die Leitung (6) münden, und Mittel zum Zirkulieren eines Reinigungsfluids, wie etwa Luft oder Lösungsmittel in diesen Kanälen (12a, 12b), wobei die seitlichen Einlasskanäle (12a) und seitliche Auslasskanäle (12b) fluidisch mit der Leitung (6) kommunizieren und so angeordnet sind, dass sie das Reinigungsfluid über die Fläche der Membranen (7a) zirkulieren lassen,
o ein Heizelement, das sich im Bereich der Impaktionszone befindet;
o die Schwingmembran (7a);

in dem Fall, in dem das Reinigungssystem eine Kombination von mindestens zwei der drei Vorrichtungen aufweist, die Membran (7a) von Steuermitteln so angesteuert wird, dass sie mit einer bestimmten Frequenz vibriert, um die Partikel in einem gewünschten Zeitraum abzuführen; und

- wobei die mindestens eine MEMS-Mikrowaage (7) als aktive Fläche eine elektrostatisch betätigte Schwingmembran (7a) aus Silizium umfasst, wobei die Schwingmembran:

o eine Abmessung in der Breite im Bereich zwischen mehreren Hundert Mikrometern und mehreren Millimetern aufweist,
o an mehreren Verankerungen (13) aus Silizium aufgehängt ist, an denen sie gespannt befestigt ist,
o zwischen mehreren Elektroden (14) angeordnet ist, die zur elektrostatischen Betätigung in der Lage sind,
o so konfiguriert ist, dass sie einen Qualitätsfaktor Q von größer als 15000 und eine Masse m im Bereich zwischen 5 und 100 μg aufweist,
o so konfiguriert ist, dass sie Schwingungsfrequenzen der Membran (7a) im Bereich zwischen 1 und 20 MHz aufweist, und
o so konfiguriert ist, dass sie es ermöglicht, das Haften und/oder das Ablösen der Partikel (2) an ihrer Fläche durch Mikro-/Nanostrukturierung oder physikalischchemische Funktionalisierung zu steuern.

**2.** Sensor (1) nach einem der vorstehenden Ansprüche, wobei die Schwingmembran (7a) eine rechteckige oder quadratische Membran und in der Lage ist, sich in ihrer Ebene im Lamé- oder extensionalen Modus zu verformen.

**3.** Sensor (1) nach einem der vorstehenden Ansprüche, wobei die Strömungsmittel für den Aerosolstrom so konfiguriert sind, dass sie einen Durchfluss von einem bis mehreren L/min ermöglichen, und wobei die axialen Düsen auf jeder Stufe eine Öffnung von einem bis mehreren Hundert Mikrometern aufweisen.

**4.** Sensor (1) nach einem der vorstehenden Ansprüche, wobei eine Wechselspannung kombiniert mit einer Gleichspannung an eine oder mehrere Betätigungselektroden (14) angelegt wird, während die aufgehängte Membran (7a) auf einem elektrostatischen Nullpotential gehalten wird, um die Membran zu verformen, wobei die Membran (7a) elektrostatisch geladen wird, wobei ihre Bewegung eine Ladungsbewegung und damit einen Strom induziert, der über Kontakte gemessen wird, die mit den Verankerungen (13) der Schwingmembran (7a) verbunden oder mit einer Elektrode (14), die nicht zur Betätigung dient, verbunden sind.

**5.** Sensor (1) nach einem der vorstehenden Ansprüche, wobei die Schwingmembran (7a) eine Fläche von einem bis mehreren mm² aufweist.

**6.** Sensor (1) nach einem der vorstehenden Ansprüche, wobei es sich bei der Fläche der Schwingmembran (7a) um schwarzes Silizium handelt.

**7.** Sensor (1) nach dem vorstehenden Anspruch, wobei die Fläche der Membran (7a) mit einer dünnen Polymerschicht überzogen ist.

**8.** Sensor (1) nach einem der vorstehenden Ansprüche, wobei der Impaktorkörper (3) einen Scheibenstapel (11) aus Silizium oder anderen mikro-/nanostrukturierten Materialien aufweist, die aneinanderliegen und aneinander befestigt sind.

**9.** Sensor (1) nach einem der vorstehenden Ansprüche, wobei der Durchmesser und die Anzahl der seitlichen Öffnungen (9) und jeder axialen Düse (10) so gewählt sind, dass sie die Steuerung des Durchflusses des Aerosolstroms und die Sortierung der PM10-Partikel (2), vorzugsweise von einem Durchmesser von 300 nm bis 10 μm, nach ihrer Trägheit auf jeder Stufe ermöglichen, um insbesondere eine thoraxgängige Fraktion in Partikeln zu messen.

**10.** Sensor (1) nach einem der vorstehenden Ansprüche, wobei das Reinigungssystem der MEMS-Mikrowaagen ein Heizelement umfasst, das sich unter jeder Schwingmembran (7a) und/oder in dem Impaktorkörper (3) auf jeder Stufe befindet.

**11.** Sensor (1) nach einem der vorstehenden Ansprüche, wobei das Reinigungssystem der MEMS-Mikrowaagen die Schwingmembran (7a) umfasst, die dazu bestimmt ist, mit einer Frequenz im Bereich zwischen 1 und 20 MHz zu schwingen, was das Ablösen der Partikel bei der Reinigung von der Schwingmembran (7a) ermöglicht.

**12.** Sensor (1) nach einem der vorstehenden Ansprüche, wobei der Impaktorkörper (3) Öffnungs-/Schließmittel aufweist:

- axiale Öffnungen (9);
- und/oder axiale Düsen (10);

um den Durchfluss des im Impaktorkörper (3) strömenden Aerosolstroms zu steuern.

**13.** Sensor (1) nach einem der vorstehenden Ansprüche, wobei der Durchmesser und die Anzahl seitlicher Öffnungen (9), die die Strömung ermöglichen, bestimmt wird, um zu impaktieren :

- die Partikel (2) zwischen 10 Mikrometer und 2,5 Mikrometer oder mehr auf einer ersten Stufe; und
- die Partikel (2) zwischen 2,5 Mikrometer und einem Mikrometer auf einer zweiten Stufe; und
- die Partikel (2) zwischen einem Mikrometer und 0,3 Mikrometer auf einer dritten Stufe, in der Richtung der Strömung des Aerosolstroms.

**14.** Sensor (1) nach einem der vorstehenden Ansprüche, wobei die Abmessungen der Schwingmembran (7a) in der Breite im Bereich zwischen 500 Mikrometer und mehreren Millimetern liegen.

**15.** Sensor (1) nach einem der vorstehenden Ansprüche, wobei die MEMS-Mikrowaage (7) von quadratischer Geometrie und so konfiguriert ist, dass sie die Messung der Masse der Partikel (2) zwischen Attogramm und Nanogramm ermöglicht.

**Claims**

**1.** Sensor (1) for the in situ continuous analysis of an aerosol stream, allowing continuous measurement of the mass concentration by size range of the micron and submicron particles (2) in suspension in the air stream, comprising:

- an aeraulic sorting device for effecting the granulometry of the particles (2) according to the size thereof with a cascade impactor body (3) with several stages,

each stage being formed by at least:

• an axial nozzle (10) through which the flow enters the stage, and
• lateral openings (9);

the diameter and the number of lateral openings (9) and of the axial nozzle (10) being selected to allow control of the flow rate of the aerosol stream and the sorting of the particles (2) according to the inertia thereof at each stage;

• a flow conduit formed by walls extending in the length of the impactor body between the axial nozzle and the lateral openings;
• at least one MEMS microbalance (7) per stage, located at a distance from and facing the axial nozzle (10), the active surface of which is located on the impaction zone of the particles (2) between the lateral openings (9) that allow the flow to pass;

the at least one MEMS microbalance including an oscillating silicon membrane (7a) configured to determine the mass less than or equal to one microgram of all the particles (2) deposited;

• at least one axial recess (8) located under each oscillating membrane (7a) in order to suspend it, the openings (9) being lateral to the axial recess (8) and intended for the flow of the aerosol stream and located on either side of the axial recess (8),

- computing means connected to each MEMS microbalance (7) for determining the mass of all the particles (2) on the impaction zone;
- means for driving the aerosol stream,

**characterised in that**

- at an inlet a head for taking off the particles allows only the PM10 particles to pass;
- a system for cleaning each MEMS microbalance, preferably at each stage, enabling the particles to be discharged out of the MEMS microbalance,

the cleaning system comprises at least one of the following devices:

o inlet channels (12a) and lateral outlet channels (12b) emerging in the conduit (6), and means for circulating a cleaning fluid such as air or solvent in these channels (12a, 12b), the lateral inlet channels (12a) and lateral outlet channels (12b) communicating fluidly with the conduit (6) and being disposed so as to cause the cleaning fluid to circulate over the surface of the membranes (7a),
o a heating element located in the impaction zone;
o the oscillating membrane (7a);

in the case where the cleaning system has a combination of at least two of the three devices, the membrane (7a) is controlled by control means to vibrate at a certain frequency in order to discharge the particles, at a required period; and

- the at least one MEMS microbalance (7) including as active surface an electrostatically actuated oscillating silicon membrane (7a), said oscillating membrane being:

o with a dimension lying in width between several hundreds of microns and several millimetres;
o suspended from several silicon anchorings (13) to which it is secured tensioned,
o disposed between several electrodes (14) suitable for electrostatic actuation,
o configured to have a quality Q factor greater than 15,000, and a mass m of between 5 and 100 $\mu$g,
o configured to have oscillation frequencies of the membrane (7a) of between 1 and 20 MHz, and
o configured to make it possible to control the adhesion and/or the separation of the particles (2) on its surface by micro/nanostructuring or physicochemical functionalisation.

2. Sensor (1) according to one of the preceding claims, wherein the oscillating membrane (7a) is a rectangular or square membrane able to deform in its plane in Lamé or extensional mode.

3. Sensor (1) according to one of the preceding claims, wherein the means for driving the aerosol stream are configured to allow a flow rate of one to several L/min, and wherein the axial nozzles at each stage have an opening of one to several hundreds of micrometres.

4. Sensor (1) according to one of the preceding claims, wherein an alternating voltage combined with a DC voltage is brought to one or more actuation electrodes (14) while the suspended membrane (7a) is maintained at a zero electrostatic potential so as to deform the membrane, the membrane (7a) being electrostatically charged, the movement thereof causing a charge movement and therefore a current measured via contacts connected to the anchorings (13) of the oscillating membrane (7a) or connected to an electrode (14) not used for the actuation.

5. Sensor (1) according to one of the preceding claims, wherein the oscillating membrane (7a) has a surface area of one to several mm$^2$.

6. Sensor (1) according to one of the preceding claims, wherein the surface of the oscillating membrane (7a) is black silicon.

7. Sensor (1) according to the preceding claim, wherein the surface of the membrane (7a) is covered with a fine layer of polymer.

8. Sensor (1) according to one of the preceding claims, wherein the impactor body (3) has a stack of slices (11) of silicon or other micro/nanostructured materials, in abutment on and attached to each other.

9. Sensor (1) according to one of the preceding claims, wherein the diameter and the number of the lateral openings (9) and of each axial nozzle (10) are selected to allow control of the flow rate of the aerosol stream and sorting of the PM10 particles (2), preferably with a diameter of 300 nm to 10 um, according to their inertia at each stage in order to measure in particular a particle thoracic fraction.

10. Sensor (1) according to one of the preceding claims, wherein the system for cleaning MEMS microbalances includes a heating element located under each oscillating membrane (7a) and/or in the impactor body (3) at each stage.

11. Sensor (1) according to one of the preceding claims, wherein the system for cleaning MEMS microbalances includes the oscillating membrane (7a) intended to oscillate at a frequency of between 1 and 20 MHz allowing separation of the particles from the oscillating membrane (7a) during cleaning.

12. Sensor (1) according to one of the preceding claims, wherein the impactor body (3) has means for the opening/closing:

- of the axial openings (9);
- and/or of the axial nozzles (10);

for controlling the flow rate of the aerosol stream flowing in the impactor body (3).

13. Sensor (1) according to one of the preceding claims, wherein the diameter and number of lateral openings (9) allowing flow is determined so as to impact:

- the particles (2) between 10 micrometres and 2.5 micrometres or more, at a first stage; and
- the particles (2) between 2.5 micrometres and one micrometre at a second stage; and
- the particles (2) between one micrometre and 0.3 micrometres at a third stage, in the direction of flow of the aerosol stream.

14. Sensor (1) according to one of the preceding claims, wherein the dimensions of the oscillating membrane (7a) are between 500 microns and several millimetres in width.

15. Sensor (1) according to one of the preceding claims, wherein the MEMS microbalance (7) has a square shape and is configured to allow measurement of the mass of the particles (2) between attogram and nanogram.

Figure 1

Coupe 2

1

3

7

5

4a

10

4b

4c

10

9

11

11a

11b

11c

11d

7

8

9

6

9

7

8

9

10

Figure 2

Vue de dessus

Coupe 2

Coupe 1

Figure 3

Figure 4

Figure 5

Figure 6

FP1

**Module de séparation des particules**

FP2

**Module de dépôt des particules**

FP3

**Module d'analyse**

Figure 7

D

B

H

F

Étape 1, 2

M

N

D

B

H

F

Étape 3, 4, 5

Figure 8

Étape 6

B'

Étape 7

Étape 8, 9, 10

Étape 11, 12

N

M

B'

T

M

T

F H B D

7a

14          13

Figure 8

Etape 17

B'

M
T

N
D

Etape 16

B

H

F

Etape 13, 14, 15

Figure 9

Figure 10a

Figure 10b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5369033 A

- EP 2204641 A

**Littérature non-brevet citée dans la description**

- Chip-Scale Implementation and Cascade Assembly of Particulate Matter Collectors With Embedded Resonant Mass Balances. **MALDONADO-GARCIA MARIBEL et al.** IEEE SENSORS JOURNAL. IEEE SERVICE CENTER, 15 Mars 2017, vol. 17, 1617-1625

- **MALDONA-GARCIA et al.** *2017 - IEEE SENSORS JOURNAL,* 15 Mars 2017, vol. 17 (6